# EUROPÄISCHE PATENTSCHRIFT

(11) **EP 0 404 994 B1**
(45) Veröffentlichungstag und Bekanntmachung des Hinweises auf die Patenterteilung: **09.11.1994**
(21) Anmeldenummer: 89111979.4
(22) Anmeldetag: 30.06.1989
(51) Int. Cl.: H04Q 11/04, H04L 5/20

(54) **Schaltungsanordnung für Internverkehr zwischen ISDN-Endgeräten**
Circuit arrangement for local traffic between ISDN-terminals
Circuit pour le trafic local entre terminaux RNIS

(43) Veröffentlichungstag der Anmeldung: 02.01.1991
(73) Patentinhaber: SIEMENS AKTIENGESELLSCHAFT, 80333 München (DE)
(72) Erfinder: Schollmeier, Gero, Dr. Ing., D-8035 Gauting (DE)

(56) Entgegenhaltungen:
- EP-A- 0 112 716
- EP-A- 0 197 479
- US-A- 4 476 557
- US-A- 4 583 214
- US-A- 4 792 800

## Beschreibung

Die Erfindung betrifft eine Schaltungsanordnung zur Bereitstellung von Internverkehr zwischen Teilnehmerendgeräten, die jedes für sich über einen sämtlichen Teilnehmerendgeräten gemeinsamen S-Bus mit einer ISDN-Netzabschlußeinheit verbindbar sind.

Bei einem dienstintegrierenden digitalen Nachrichtennetz sind unterschiedliche Fernmeldedienste, die Sprache, Daten, Text, Faksimile, Festbildkommunikation und Fernwirkinformation betreffen können, in einem einheitlichen digitalen Nachrichtennetz zusammengefaßt.

Im Teilnehmeranschlußbereich eines solchen ISDN-Netzes kann bekanntlich eine Mehrzahl von Teilnehmerendgeräten über einen den Teilnehmerendgeräten gemeinsamen S-Bus an eine den teilnehmerseitigen Netzabschluß bildende Netzabschlußeinheit angeschlossen werden.

Eine Internverkehrsmöglichkeit, also eine Verbindung zwischen Endgeräten, vorzugsweise gleicher Art, einunddesselben Teilnehmeranschlusses, wie sie beispielsweise durch eine Telefonverbindung Chef-Sekretärin gegeben sein kann, ist bei genormten Basis-ISDN-Teilnehmeranschlüssen nicht vorgesehen.

Aus der DE-A1-3 425 720 ist ein Verfahren zur Herstellung von Internverbindungen zwischen zwei in Busstruktur installierten Endgeräten desselben Teilnehmers eines dienstintegrierten digitalen Netzwerks bekannt, wobei unter der Voraussetzung einer bestehenden Amtsverbindung bei einem der an der Internverbindung beteiligten Endgeräte bezüglich des für die Internverbindung verwendeten Basiskanals Sende- und Empfangsrichtung vertauscht werden, was zum einen eine Mitwirkung der Vermittlungsstelle erfordert und wonach zum anderen das betreffende Endgerät nicht mehr in üblicher Weise erreichbar ist.

Aus der DE-A1-3 316 492 ist ein ISDN-Teilnehmeranschluß bekannt, der Internverkehrsmöglichkeiten zwischen über separate S-Schnittstellen mit der Netzabschlußeinheit verbundenen Teilnehmerendgeräten vorsieht, wobei solche Internverbindungen über die Netzabschlußeinheit geführt werden.

Weiter ist aus der EP-A-0 151 433 eine Gerätekonfiguration im Teilnehmeranschlußbereich eines ISDN-Netzes bekannt, bei der ein Abfrageterminal mit der Netzabschlußeinheit kombiniert ist und zwischen diesem Terminal und über einen gemeinsamen S-Bus angeschlossenen Endgeräten ein vom Amtsverkehr unabhängiger Internverkehr möglich ist.

Aus der US-A-4 792 800 ist eine Gerätekonfigurartion für einen ISDN-Teilnehmeranschluß bekannt, bei der in der Netzabschlußeinheit eine Schalteinrichtung vorgesehen ist, über die zur Bereitstellung von Internverkehr ein Übertragungsweg zwischen dem Sendeadernpaar und dem Empfangsadernpaar einrichtbar ist.

Bei den aus den drei zuletzt genannten Veröffentlichungen bekannten Schaltungsanordnungen macht es sich nachteilig bemerkbar, daß jeweils eine gegenüber einer standardisierten Netzabschlußeinheit geänderte Netzabschlußeinheit zum Einsatz kommen muß, wodurch sich Probleme fernmelderechtlicher Art ergeben können, da die Netzabschlußeinheit im allgemeinen in den Zuständigkeitsbereich des Netzbetreibers fällt.

Ferner ist es aus der europäischen Patentanmeldung EP-A-0 112 716 bekannt, für zwei Sende-Empfangseinrichtungen, zwischen denen über ein Vierdrahtleitungssystem für jede Übertragungsrichtung ein Übertragungsweg besteht, mit Hilfe eines Phantomkreises einen zusätzlichen Übertragungsweg zur bidirektionalen Übertragung von Digitalsignalen zu bilden.

Schließlich ist aus der US-A-4 583 214 ein Fernsprechübertragungssystem bekannt, bei dem ein Nebenapparat über eine Vierdrahtleitung mit einem Hauptapparat verbunden ist und bei dem über einen mit der Vierdrahtleitung gebildeten Phantomkreis eine Übertragung von analogen Sprachsignalen zwischen dem Hauptapparat und dem Nebenapparat möglich ist; ein Hinweis auf eine Anwendbarkeit dieses Übertragungssystems zur Abwicklung von Internverbindungen zwischen den Teilnehmerendgeräten eines ISDN-Teilnehmeranschlusses ist indessen nicht gegeben.

Die Erfindung stellt sich nun die Aufgabe, eine Schaltungsanordnung anzugeben, die eine Internverkehrsmöglichkeit zwischen an einen gemeinsamen S-Bus einer Netzabschlußeinheit angeschlossenen Teilnehmerendgeräten unter Vermeidung der den bekannten Anordnungen anhaftenden Nachteile ermöglicht, insbesondere ohne Mitwirkung der Vermittlungsstelle, mit der die Netzabschlußeinheit verbunden ist.

Die Aufgabe wird in einer Schaltungsanordnung der eingangs umrissenen Art erfindungsgemäß dadurch gelöst, daß zwischen den Teilnehmerendgeräten mit dem Sendeadernpaar und dem Empfangsadernpaar des S-Busses ein Phantomkreis als Übertragungsweg für den Internverkehr gebildet ist.

Die Erfindung bringt neben dem Vorteil, daß an der teilnehmerseitigen Netzabschlußeinheit, die im allgemeinen in den Zuständigkeitsbereich des Netzbetreibers fällt, keine Modifikationen notwendig sind und daß zur Abwicklung des Internverkehrs keine Mithilfe der Vermittlung notwendig ist, an die die Netzabschlußeinheit angeschlossen ist, den weiteren Vorteil mit sich, daß die Eigenschaften der genormten S-Schnittstelle unbeeinflußt bleiben, so daß ohne weiteres, insbesondere ohne daß es einer etwaigen Normung bezüglich des Internverkehrs bedürfte, für den Internverkehr vorgesehene Teilnehmerendgeräte entsprechend der Erfindung zusammen mit sonstigen S-Bus-fähigen Teilnehmerendgeräten an dem gemeinsamen S-Bus betrieben werden können.

Einer weiteren Ausgestaltung der Erfindung zufolge ist der den Phantomkreis abschließende Übertrager seinerseits mit einem an den geräteinternen Bus angeschlossenen Übertragungsbaustein verbunden. Diese Maßnahme bringt den Vorteil mit sich, daß der zusätzliche Aufwand für den Internverkehr klein gehalten wird. Einer anderen Weiterbildung der Erfindung zufolge kann der den Phantomkreis abschließende Übertrager über einen Umschalter wahlweise mit den zum Sendeadernpaar des S-Busses oder den zum Empfangsadernpaar des S-Busses führenden Verbindungsleitungen des Teilnehmerendgerätes verbindbar sein. Diese Ausführungsform der Erfindung ermöglicht bei Einsatz eines Halbduplexübertragungsverfahrens die Mitbenutzung eines ohnehin schon vorhandenen Sende- und Empfangsbausteins.

An dieser Stelle sei bemerkt, daß aus der US-A-4 476 557 ein mit einer Vierdrahtleitung gebildeter Phantomkreis bekannt ist, bei dem die Sende- und Empfangseinrichtungen jeweils über einen Umschalter mit dem Phantomkreis verbunden sind. Die Umschalter dienen dort bei der erstmaligen Inbetriebnahme zur polaritätsrichtigen Anschaltung an die korrespondierende Sende- und Empfangseinrichtung; eine Umschaltung der Sende- und Empfangseinrichtung im Phantomkreis ist nicht gegeben.

In weiterer Ausgestaltung der zuvor genannten Weiterbildung der Erfindung ist der Umschalter nach Maßgabe von Sprachpegeln, die an den am Internverkehr beteiligten Teilnehmerendgeräten anliegen, steuerbar. Diese Weiterbildung bringt den Vorteil einer einfachen Bedienbarkeit mit sich, wenn der Übertragungsweg jeweils für das Teilnehmerendgerät freigeschaltet wird, an dem der höhere Sprachpegel anliegt.

Die Erfindung wird anhand der im folgenden erläuterten Figuren näher beschrieben. Es zeigen:
- FIG 1: ein Ausführungsbeispiel eines ISDN-Teilnehmeranschlusses entsprechend der Erfindung,
- FIG 2: ein alternatives Ausführungsbeispiel für ein Teilnehmerendgerät entsprechend der Erfindung.

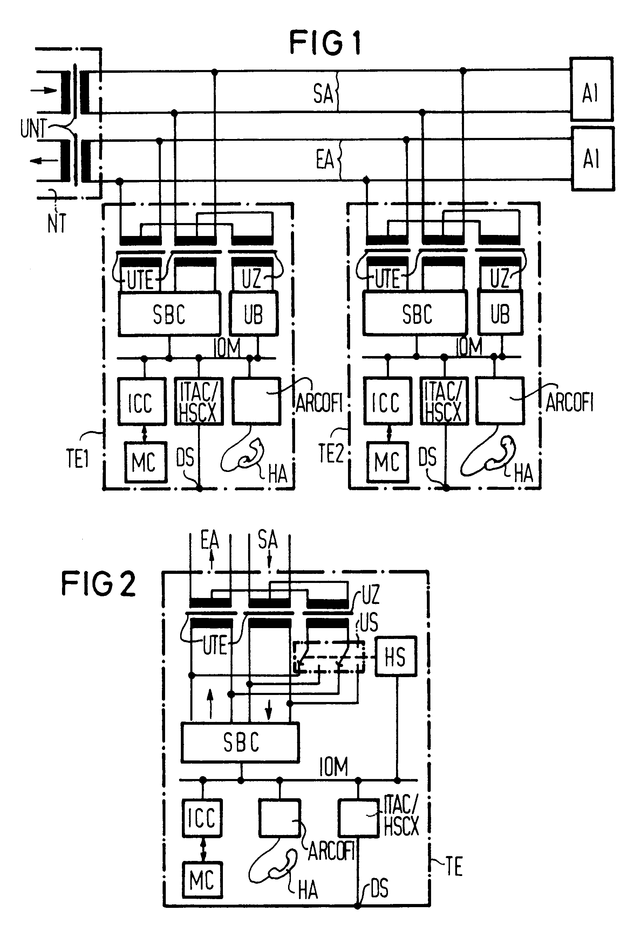

FIG 1 zeigt einen ISDN-Teilnehmeranschluß mit einer Netzabschlußeinheit NT, die den Übergabepunkt zwischen Netzbetreiber und Teilnehmer bildet und die teilnehmerseitig jeweils für die Sende- und die Empfangsrichtung mit einem Übertrager UNT abgeschlossen ist. Mit den Übertragern UNT sind ein Sendeadernpaar SA und ein Empfangsadernpaar EA verbunden, die jeweils am Leitungsende mit einer Abschlußimpedanz AI versehen sind und die den S-Bus bilden. Mit dem Sendeadernpaar SA und dem Empfangsadernpaar EA des S-Bus ist jeweils der beispielsweise durch einen in Siemens Components 26 (1988), Heft 6, Seite 230 dargestellten S-Bus Interface Baustein (SBC) gegebene Sende- und Empfangsbaustein SBC, zweier Teilnehmerendgeräte TE1, TE2 über Übertrager UTE verbunden. Auf der anderen Seite ist der Sende- und Empfangsbaustein SBC mit einem geräteinternen Bus IOM verbunden, an den in an sich bekannter Weise weitere ISDN-Bausteine wie z.B. ein sog. ISDN Communication Controller ICC, der seinerseits von einem Mikroprozessor MC gesteuert sein kann, ein sog. ISDN Terminal Adapter ITAC/HSCX und ein sog. Audio Ringing Codec Filter ARCOFI angeschlossen sein mögen.
Ein solches insoweit bekanntes ISDN-Teilnehmerendgerät wird nun erfindungsgemäß dahingehend modifiziert, daß an die S-Bus-seitigen Mittelanzapungen der Übertrager UTE, die die Ankopplung zwischen S-Bus und dem Teilnehmerendgerät TE bewirken ein zusätzlicher Übertrager UZ angeschlossen ist. Dadurch entsteht zwischen den Teilnehmerendgeräten TE ein Phantomkreis, gebildet aus Sendeadernpaar SA und Empfangsadernpaar EA des S-Busses, über den Teilnehmerendgeräte TE, die mit einem gemeinsamen S-Bus eines Teilnehmeranschlusses verbunden sind, Internverkehr abwickeln können. Der zusätzliche Übertrager UZ ist mit einem Übertragungsbaustein UB und dieser wiederum mit dem geräteinternen Bus IOM verbunden. Der Übertragungsbaustein UB bewirkt eine Anpassung zwischen der auf dem geräteinternen Bus IOM gegebenen Signaldarstellung und einer im Phantomkreis auf dem Sende-Empfangsadernpaar SA, EA erforderlichen Signaldarstellung. Im Phantomkreis kann prinzipiell jedes Übertragungsverfahren, das zur Zweidrahtübertragung geeignet ist, zur Anwendung kommen. Wird ein Echokompensationsverfahren als Übertragungsverfahren auf dem Phantomkreis eingesetzt, so kann beispielsweise ein Gabelübertrager in Verbindung mit einem Echokompensationsbaustein IEC, wie er beispielsweise aus ELECTRONIK, Heft 5, 1989, Seiten 120-128, Bild 7, bekannt ist, eingesetzt werden. Wird ein Zeitgetrenntlageverfahren als Übertragungsver fahren auf dem Phantomkreis gewählt, so kann beispielsweise für den Übertragungsbaustein UB ein das Zeitgetrenntlageverfahren realisierender Baustein IBC, wie er beispielsweise aus ELECTRONIK, Heft 5, 1989, Seiten 120-128, Bild 3, bekannt ist, eingesetzt werden. Die vorgenannten Bausteine IEC sowie IBC weisen dabei vorteilhafterweise bereits eine passende Schnittstelle zum geräteinternen Bus IOM auf.

In FIG 2 ist ein Teilnehmerendgerät TE dargestellt, das alternativ zu den in FIG 1 dargestellten Teilnehmerendgeräten TE1, TE2 bei Anwendung eines Halbduplex-Übertragungsverfahrens auf dem Phantomkreis zum Einsatz kommen kann. Das Teilnehmerendgerät TE unterscheidet sich von den in FIG 1 dargestellten Teilnehmerendgeräten TE1, TE2 dadurch, daß der den Phantomkreis realisierende Übertrager UZ teilnehmerendgeräteseitig mit einem Umschalter US verbunden ist, der entweder den Eingang oder den Ausgang des Sende- und Empfangsbausteins SBC auf den Phantomkreis schalten kann. Der Umschalter US, der vorzugsweise durch elektronische Schaltmittel realisiert wird, wird durch eine Halbduplexsteuerung HS, die wiederum mit dem geräteinternen Bus IOM verbunden ist, gesteuert. Die Halbduplexsteuerung HS kann durch einen Befehl, den sie über den geräteinternen Bus IOM von dem Kontrollbaustein ICC empfängt, eine Umschaltung der Übertragungsrichung auf dem Phantomkreis bewirken. Dabei kann das Umschalten beispielsweise bei einer internen Telefonverbindung in Abhängigkeit vom Sprachpegel erfolgen, so wie es beispielsweise von Echosperren bekannt ist, die früher in Telefonweitverkehrsverbindungen eingesetzt wurden. Bei einer Internverbindung zwischen Datenendgeräten, die jeweils über eine Datenschnittstelle DS mit dem jeweiligen Teilnehmerendgerät TE verbunden sein mögen, kann die Umschaltung der Übertragungsrichtung zeitabhängig oder jeweils bei Bedarf erfolgen. Die Anwendung des Halbduplexübertragungsverfahrens bringt den Vorteil mit sich, daß der ohnehin schon vorhandene Sende- und Empfangsbaustein SBC für Internverbindungen mitbenutzt werden kann.

Soll eine Internverbindung beispielsweise zwischen den in FIG 1 dargestellten Teilnehmerendgerät TE1 und Teilnehmerendgerät TE2 hergestellt werden, so wird vom Mikroprozessor MC, beispielsweise auf einen Knopfdruck hin, ein Verbindungswunsch über den Kontrollbaustein ICC, den geräteinternen Bus IOM und den Übertragungsbaustein UB des einen Teilnehmerenderätes TE1, den Phantomkreis, den Übertragungsbaustein UB des anderen Teilnehmerendgerätes TE2, dessen geräteinternen Bus IOM und den Kontrollbaustein ICC zum Mikroprozessor MC übertragen. In dem gerufenen Teilnehmerendgerät TE2 löst der Mikroprozessor MC in dem Audio-Ringing-Codec-Filter-Baustein ARCOFI einen Ruftongeber aus, der im gegeben Fall eines Internrufes ein vom Amtsruf unterschiedliches Rufsignal abgeben kann. Wird der Handapparat HA des gerufenen Teilnehmerendgeräts TE2 abgehoben, so entsteht über die jeweiligen Audio-Ringing-Codec Filter-Baustein ARCOFI, die geräteinternen Busse IOM, die Übertragungsbausteine UB, bzw. über die Sende- und Empfangsbausteine SBC und den Phantomkreis eine Internverbindung, wobei die jeweiligen Kontrollbausteine ICC zusammen mit den Mikroprozessoren MC den Verbindungsablauf steuern.
Bei mehreren an einen gemeinsamen S-Bus angeschlossenen Teilnehmerendgeräten, die entsprechend der Erfindung für Internverkehr geeignet sind, ist es denkbar, durch geeignete Signalisierung eine Internverbindung zu einem bestimmten Teilnehmerendgerät TE herzustellen, wobei jedem solchen Teilnehmerendgerät TE ein bestimmtes Signalisierungsmuster zugeordnet sein kann. Durch die Möglichkeit, ein bestimmtes Teilnehmerendgerät TE anzuwählen, ergibt sich eine interne Vermittlungsfunktion.

Ergänzend sei noch bemerkt, daß bei einem Gegenstand entsprechend der Erfindung an den gemeinsamen S-Bus auch Zusatzgeräte angeschlossen werden können, die keine Kommunikation über die Netzabschlußeinheit NT mit externen ISDN-Teilnehmern, sondern lediglich Internkommunikation ermöglichen.

Abschließend sei noch bemerkt, daß zu einer Internverkehrsmöglichkeit entsprechend der Erfindung auch eine Gleichstromspeisung der Teilnehmerendgeräte TE von der Netzabschlußeinheit NT aus über den Phantomkreis hinzutreten kann, wobei geeignete Siebmittel eine Signaltrennung ermöglichen.

## Patentansprüche

1. Schaltungsanordnung zur Bereitstellung von Internverkehr zwischen Teilnehmerendgeräten (TE), die jedes für sich über einen sämtlichen Teilnehmerendgeräten gemeinsamen S-Bus mit einer ISDN-Abschlußeinheit (NT) verbindbar sind,
**dadurch gekennzeichnet,**
daß zwischen den Teilnehmerendgeräten mit dem Sendeadernpaar (SA) und dem Empfangsadernpaar (EA) des S-Busses ein Phantomkreis als Übertragungsweg für den Internverkehr gebildet ist.

2. Schaltungsanordnung nach Anspruch 1,
**dadurch gekennzeichnet,**
daß der den Phantomkreis abschließende Übertrager (UZ) seinerseits mit einem an den geräteinternen Bus (IOM) angeschlossenen Übertragungsbaustein (UB) verbunden ist.

3. Schaltungsanordnung nach Anspruch 1,
**dadurch gekennzeichnet,**
daß der den Phantomkreis abschließende Übertrager (UZ) über einen Umschalter (US) wahlweise mit den zum Sendeadernpaar (SA) des S-Busses oder den zum Empfangsadernpaar (EA) des S-Busses führenden Verbindungsleitungen des Teilnehmerendgeräts verbindbar ist.

4. Schaltungsanordnung nach Anspruch 3,
**dadurch gekennzeichnet,**
daß der Umschalter (US) nach Maßgabe von Sprachpegeln, die an den am Internverkehr beteiligten Teilnehmerendgeräten anliegen, steuerbar ist.

5. Schaltungsanordnung nach einem der vorhergehenden Ansprüche,
**dadurch gekennzeichnet,**
daß mit dem Phantomkreis ein Zusatzgerät verbunden ist, das lediglich zu Internverkehr fähig ist.

## Claims

1. Circuit arrangement for providing local traffic between subscriber terminals (TE) which can each be connected to an ISDN terminating unit (NT) via an S bus shared by all subscriber terminals, characterized in that a phantom circuit is formed between the subscriber terminals with the transmitting wires pair (SA) and the receiving wires pair (EA) of the S bus as the transmission path for the local traffic.

2. Circuit arrangement according to Claim 1, characterized in that the transformer (UZ) terminating the phantom circuit is connected in turn to a transmission module (UB) connected to the internal device bus (IOM).

3. Circuit arrangement according to Claim 1, characterized in that the transformer (UZ) terminating the phantom circuit can be connected via a switchover means (US) either to the link lines of the subscriber terminal leading to the transmitting wires pair (SA) of the S bus or to those leading to the receiving wires pair (EA) of the S bus.

4. Circuit arrangement according to Claim 3, characterized in that the switchover means (US) can be controlled in accordance with voice levels applied to the subscriber terminals participating in the local traffic.

5. Circuit arrangement according to one of the preceding claims, characterized in that an auxiliary device which is only capable of handling local traffic is connected to the phantom circuit.

## Revendications

1. Montage pour avoir un trafic interne entre des terminaux (TE) d'abonnés, qui peuvent être reliés, chacun pour soi, à une unité (NT) de terminaison RNIS, par l'intermédiaire d'un bus S commun à tous les terminaux d'abonnés, caractérisé en ce qu'un circuit fantôme est formé en tant que voie de transmission pour le trafic interne entre les terminaux d'abonnés par la paire (SA) de conducteurs d'émission et par la paire (EA) de conducteurs de réception du bus S.

2. Montage suivant la revendication 1, caractérisé en ce que le transformateur (UZ), qui termine le circuit fantôme, est relié pour sa part à un module de transmission (UB), qui est raccordé au bus (lOM) interne à l'appareil.

3. Montage suivant la revendication 1, caractérisé en ce que le transformateur (UZ), qui termine le circuit fantôme, peut être raccordé par l'intermédiaire d'un commutateur (US) au choix aux lignes de raccordement du terminal d'abonné, qui aboutissent à la paire (SA) de conducteurs d'émission du bus S ou à la paire (EA) de conducteurs de réception du bus S.

4. Montage suivant la revendication 3, caractérisé en ce que le commutateur (US) peut être commandé, en fonction de niveaux vocaux, qui sont appliqués aux terminaux d'abonnés participant au trafic interne.

5. Montage suivant l'une des revendications précédentes, caractérisé en ce qu'au circuit fantôme est relié un appareil supplémentaire, qui permet de transmettre uniquement le trafic interne.
